# EUROPÄISCHE PATENTANMELDUNG

(11) **EP 1 457 616 A1**
(43) Veröffentlichungstag der Anmeldung: **15.09.2004**
(21) Anmeldenummer: 03405153.2
(22) Anmeldetag: 05.03.2003
(51) Int. Cl.: E04C 2/36, B23K 1/00

(54) **Verbundplatte aus Leichtmetall**

(71) Anmelder: Alcan Technology & Management Ltd., 8212 Neuhausen am Rheinfall (CH)
(72) Erfinder: Hotz, Walter, 8222 Beringen (CH); Gabi, Urs, 8207 Schaffhausen (CH); Gabathuler, Jean-Pierre, 8226 Schleitheim (CH)

(57) **Zusammenfassung**

Bei einer Verbundplatte (10) aus wenigstens einem Deckblech (12) aus Leichtmetall und wenigstens einer mit dem Deckblech (12) verbundenen Kernschicht (14) aus Leichtmetall weisen die Kernschichten (14) eine geringere Dichte auf als die Deckbleche (12). Benachbarte Deckbleche (12) und Kernschichten (14) sind über eine Zwischenschicht (16) aus einem Hartlot miteinander verbunden. Bei einem zur Herstellung einer Verbundplatte (10) geeigneten Verfahren werden die Deckbleche (12), Kernschichten (14) und Hartlot-Zwischenschichten (16) zu einem Stapel (18) aufeinander gelegt. Der Stapel (18) wird in einem Ofen (60) unter Schutzgasatmosphäre bei leichter Flächenpressung auf eine zwischen Liquidustemperatur (T_{liq}) des Hartlotes und Solidustemperatur (Tₛₒₗ) der Deckblech- und Kernschichtwerkstoffe liegende Löttemperatur (T_{löt}) aufgeheizt und nach dem Schmelzen des Hartlotes unter leichter Flächenpressung abgekühlt. Die erfindungsgemässen Verbundplatten zeichnen sich aus durch eine hohe Temperaturbeständigkeit bis etwa 550°C. Das Produkt kann wärmebehandelt werden, ist schweissbar, feuerresistent, emaillierbar und ermöglicht ein Lackeinbrennen bei hoher Temperatur.

## Beschreibung

Die Erfindung betrifft eine Verbundplatte aus wenigstens einem Deckblech aus Leichtmetall und wenigstens einer mit dem Deckblech verbundenen Kernschicht aus Leichtmetall, wobei die Kernschichten eine geringere Durchschnittsdichte aufweisen als die Deckbleche. Im Rahmen der Erfindung liegt auch ein Verfahren zur Herstellung der Verbundplatte.

Bekannte Leichtmetallverbundplatten weisen beispielsweise einen aus seitlich partiell miteinander verklebten Folienstreifen aus Aluminium aufgebauten Wabenkern auf, der beidseitig mit Deckblechen aus Aluminium verklebt ist. Der Vorteil einer derartigen Leichtmetallverbundplatte liegt in der mit zunehmender Kerndicke steigenden hohen Steifigkeit.

Bei vergleichbarer Steifigkeit weist eine Verbundplatte mit einem Kern, dessen Dichte niedriger ist als die Dichte der Deckbleche, im Vergleich zu einem Vollblech ein geringeres Gewicht pro Quadratmeter auf.

Ein Nachteil der geklebten Leichtmetallverbundplatten liegt darin, dass die verwendeten Klebstoffe den Anwendungsbereich der Verbundplatten bei höheren Temperaturen ab etwa 100°C stark einschränken und bei Temperaturen von mehr als etwa 200°C wegen Zersetzung der Klebstoffe eine stark verminderte mechanische Stabilität aufweisen, so dass bei längerer Temperatureinwirkung die Gefahr einer Delamination der Klebstoffschicht und damit eines Zerfalls der Struktur besteht. Hinzu kommt, dass geklebte Verbundplatten den heutigen Brandschutzanforderungen oft nicht genügen. Zudem lassen sich Verbundwerkstoffe mit Klebstoffschichten praktisch kaum mehr schweissen, was den Anwendungsbereich weiter einschränkt.

Der Erfindung liegt die Aufgabe zugrunde, eine schweissbare Verbundplatte der eingangs genannten Art mit einer hohen Wärmebeständigkeit zu schaffen.

Zur erfindungsgemässen Lösung der Aufgabe führt, dass benachbarte Deckbleche und Kernschichten über eine Zwischenschicht aus einem Hartlot miteinander verbunden sind.

Die Solidustemperatur der für die Deckbleche und die Kernschichten verwendeten Werkstoffe liegt bevorzugt über der Liquidustemperatur des Hartlotes.

Der Einsatz eines Hartlotes als Verbindungsmittel zwischen Kernschicht und Deckblech und der vollständige Verzicht auf organische Klebstoffe eröffnet der erfindungsgemässe Verbundplatte gegenüber Verbundplatten nach dem Stand der Technik ein wesentlich breiteres Anwendungsgebiet.

Die erfindungsgemässen Verbundplatten zeichnen sich aus durch eine hohe Temperaturbeständigkeit bis etwa 550°C. Das Produkt kann wärmebehandelt werden, ist schweissbar, feuerresistent, emaillierbar und ermöglicht ein Lackeinbrennen bei hoher Temperatur.

Ein weiterer wesentlicher Vorteil der erfindungsgemässen Verbundplatte ist die Umformbarkeit, die natürlich auch von der Gesamtdicke, von den für die Deckbleche und die Kernschichten verwendeten Werkstoffen, von der Art des Kernes, der Morphologie und der Wärmebehandlung abhängig ist. Bei aushärtbaren Legierungen wird die Umformung mit Vorteil durchgeführt, solange die Deckbleche sich nach dem Lötvorgang und nach rascher Abkühlung noch im weichgeglühten Zustand befinden. Danach kann der Verbund ausgehärtet werden, was beispielsweise auch mit einer im Rahmen eines Lackeinbrennvorganges durchgeführten Wärmebehandlung erfolgen kann.

Weitere Vorteile liegen in der leichten Rezyklierbarkeit, der absoluten Unbrennbarkeit, dem leichten Gewicht, der hohen Steifigkeit und dem Fehlen organischer Substanzen. Das Produkt ist kostengünstig herzustellen, weist eine gute Schallabsorption auf, ist gut schweissbar und kann auch als Crashelement Verwendung finden.

Die bevorzugte Ausführungsform einer Verbundplatte weist eine Kernschicht mit beidseitig angeordneten Deckblechen auf. Es sind jedoch auch Anwendungen mit einer Verbundplatte aus einer Kernschicht und einem nur einseitig angeordneten Deckblech denkbar. In gewissen Fällen kann es sich als zweckmässig erweisen, eine dicke Verbundplatte aus wenigstens zwei Kernschichten und wenigstens einem Deckblech in alternierender Anordnung aufzubauen.

Als Werkstoffe für die Deckbleche und die Kernschichten eignen sich insbesondere Aluminium, Magnesium und Kupfer sowie deren Legierungen, wobei für eine Vielzahl von Anwendungen Aluminium und Aluminiumlegierungen bevorzugt eingesetzt werden.

Als Werkstoffe für die Deckbleche werden aus Festigkeitsgründen zweckmässigerweise aushärtbare oder naturharte Aluminiumlegierungen eingesetzt. Die Kernschichten können ebenfalls aus diesen Legierungen bestehen, jedoch ist in vielen Fällen Reinaluminium ein zweckmässiges und billiges Kernmaterial.

Kernschichten weisen eine gegenüber Deckblechen niedrigere durchschnittliche Dichte auf. Die Kernschicht dient bei Verbundplatten mit beidseitig angeordneten Deckblechen als Abstandhalter. Auch die Übertragung von Schubkräften zwischen den beiden Deckblechen erfolgt über die zwischengeordnete Kernschicht.

Neben der Verwendung im unverformten Zustand wird mit dem Einsatz aushärtbarer Aluminiumlegierungen als Werkstoffe für die Deckbleche und ggf. auch für die Kernschichten eine Möglichkeit geschaffen, die Verbundplatten im weichen Zustand umzuformen und anschliessend warm auszuhärten. Unter aushärtbaren Aluminiumlegierungen werden hier vor allem die Legierungen der Reihen AA 2xxx, 6xxx und 7xxx verstanden.

Insbesondere für Anwendungsfälle, bei denen eine Ausscheidungshärtung nicht erforderlich ist, können naturharte Aluminiumlegierungen der Reihen AA 1xxx, 3xxx und 5xxx als Deckblech- und Kernschichtwerkstoffe eingesetzt werden. Beispiele von naturharten Legierungen sind etwa AlMn1, AlMn1Mg0.2Cu0.6 und AlMn1.5Cu0.6.

Als Hartlot eignen sich insbesondere die Aluminiumlegierungen AA 4043, 4343, 4045 und 4047. Bei der Wahl des Hartlotes muss darauf geachtet werden, dass dessen Liquidustemperatur tiefer liegt als die Solidustemperatur der Deckblech- und Kernschichtwerkstoffe.

Die Dicke der Deckbleche und der Kernschichten kann je nach Anwendung in weiten Bereichen variieren. Im allgemeinen beträgt jedoch die Dicke der Deckbleche 0,2 bis 5 mm, die Dicke der Kernschichten 0,5 bis 250 mm, in Spezialfällen bis etwa 500 mm. Die Dicke der Hartlotschichten liegt im allgemeinen zwischen etwa 0,01 und 1 mm.

Wie bereits oben erwähnt, dienen die Kernschichten als Abstandshalter zwischen den Deckschichten und zur Übertragung von Schubspannungen. Daneben tragen sie wesentlich zu einer gewünschten Gewichtsreduktion bei. Die genannten Eigenschaften führen zu einer mit der Kerndicke steigenden hohen Steifigkeit der Verbundplatte und die geringe Dichte bzw. die Leichtigkeit der Kernschichten hat zur Folge, dass das Gewicht der Verbundplatte pro Quadratmeter niedriger ist als dasjenige eines Vollbleches gleicher Steifigkeit.

Die Kernschichten können verschiedenartig aufgebaut sein. Zweckmässige Ausführungsformen sind beispielsweise
- Streckmetallblech, das zur Erzielung einer grösseren Kontakt- bzw. Lötfläche zu den Deckblechen auch mehr oder weniger flachgewalzt sein kann. Durch Vergrösserung der Kontaktfläche ergibt sich auch eine bessere Umformbarkeit der Verbundplatte und eine Verbesserung der Oberflächenqualität nach dem Umformen.
- Wellblech mit ein- oder beidseitig ausgebildeten Wellen.
- Noppenblech mit ein- oder beidseitig ausgebildeten Noppen.
- Eine aus korrugierten und seitlich aneinandergereihten Metallstreifen aufgebaute Wabenkernstruktur.
- Gestanztes (gelochtes) und/oder geformtes Blech.
- Drahtgeflechte aller Art, ggf. mit Hartlot beschichtet.
- Gewobene oder gestrickte, ggf. auch flachgewalzte und mit Hartlot beschichtete Materialien
- Aluminium in geschäumter Form

Ein zur Herstellung einer erfindungsgemässen Verbundplatte geeignetes Batch-Verfahren zeichnet sich dadurch aus, dass die Deckbleche, die Kernschichten und die Hartlot-Zwischenschichten zu einem Stapel aufeinander gelegt werden, der Stapel in einem Ofen unter Schutzgasatmosphäre bei leichter Flächenpressung auf eine zwischen der Liquidustemperatur des Hartlotes und der Solidustemperatur der Deckblech- und Kernschichtwerkstoffe liegende Löttemperatur aufgeheizt und nach dem Schmelzen des Hartlotes unter leichter Flächenpressung abgekühlt wird.

Bei einer besonders vorteilhaften Ausgestaltung des erfindungsgemässen Verfahrens bestehen die Deckbleche und/oder die Kernschichten aus einer aushärtbaren Legierung und die Abkühlung von der Löttemperatur wird so rasch durchgeführt, dass die die Aushärtung bewirkenden Elemente in Lösung bleiben. Derart hergestellte Verbundplatten lassen sich in diesem verhältnismässig weichen Zustand gut verformen und nach der Umformung warm aushärten. Die Verbundplatten können aber auch nachträglich einem Zyklus bestehend aus Lösungsglühen, Abschrecken und Aushärten unterzogen werden. Je nach Anwendungsfall kann die Warmhärtung beispielsweise während eines Lackeinbrennzyklus erfolgen.

Das Hartlot kann auf verschiedene Arten in den Verbindungsbereich zwischen Deckblech und Kernschicht eingebracht werden, wobei die folgenden Verfahren bevorzugt werden:
- Die Hartlotschicht wird direkt auf die Deckbleche aufplattiert, z.B. durch Walzplattieren.
- Das Hartlot wird als Folie zwischen Deckblech und Kernschicht gelegt
- Die Kernschicht wird vor ihrer Strukturierung mit dem Hartlot plattiert. Dieses Verfahren ist beispielsweise für die Herstellung von Verbundplatten mit Kernschichten aus Wellblechen oder Streckmetall geeignet.
- Das Hartlot kann ggf. zusammen mit einem Flussmittel als Paste oder Pulver auf die Deckbleche bzw. Kernschichten aufgetragen bzw. aufgesprüht werden. Dieses Verfahren eignet sich insbesondere für die kontinuierliche Herstellung von Verbundplatten.

Bei einem zur kontinuierlichen Herstellung von Verbundplatten geeigneten Verfahren werden die Deckbleche, die Kernschicht und die Hartlot-Zwischenschichten kontinuierlich zu einem Stapel zusammengeführt. Die Deckbleche werden ab Coil zugeführt. Der Stapel wird unter Schutzgasatmosphäre auf eine zwischen der Liquidustemperatur des Hartlotes und der Solidustemperatur der Deckblech- und Kernschichtwerkstoffe liegende Löttemperatur aufgeheizt und nach dem Schmelzen des Hartlotes abgekühlt, was im Fall von aushärtbaren Legierungen so schnell erfolgen kann, dass die die Aushärtung bewirkenden Elemente in Lösung bleiben. Die Abtrennung der einzelnen Verbundplatten von der abgekühlten Verbundbahn kann durch Schneiden öder Sägen erfolgen.

Die Herstellung der Kernschicht erfolgt üblicherweise ebenfalls kontinuierlich. Besteht die Kernschicht aus Streckmetall, wird ein Metallband ab Coil in Linie geschnitten, gestreckt und ggf. leicht flachgewalzt. Auch eine Kernschicht aus einem Well- oder Noppenblech kann ab Coil in Linie umgeformt werden. Für einen Wabenkern werden Streifen in Linie korrugiert und seitlich aneinander gereiht, ggf. unter Zwischenordnung je eines nicht korrugierten Streifens zwischen einander benachbarten korrugierten Streifen. Gelochte Bleche können in Linie gestanzt werden. Auch Drahtgeflechte können in Linie gewoben bzw. geflochten werden. Die Kernschicht kann aber auch vorgefertigt und batchweise der kontinuierlichen Fertigungslinie zugeführt werden.

Das Hartlot ist entweder bereits auf den Deckblechen aufplattiert oder es kann kontinuierlich in Form eines Folienbandes zugeführt werden. Eine weitere Möglichkeit besteht darin, das Hartlot direkt auf die Deckbleche und/oder auf die Kernschichten aufzutragen oder aufzusprühen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1 eine Verbundplatte mit Deckblechen, Kernschicht und Hartlot-Zwischenschichten;
- Fig. 2 die Draufsicht auf ein Streckmetallblech vor dem Expandieren;
- Fig. 3 eine Schrägsicht auf das Streckmetallblech von Fig. 2 nach dem Expandieren;
- Fig. 4 die Draufsicht auf ein Noppenblech;
- Fig. 5 drei Querschnitte durch das Noppenblech von Fig. 4 nach deren Linien A-A, B-B und C-C;
- Fig. 6 eine mögliche Herstellung korrugierter Streifen;
- Fig. 7 die Draufsicht auf einen aus korrugierten Streifen aufgebauten Wabenkern;
- Fig. 8 einen Querschnitt durch den Wabenkern von Fig. 7 nach deren Linie I-I;
- Fig. 9 die kontinuierliche Herstellung von Verbundplatten:
- Fig. 10 einen Querschnitt durch den Verbund von Fig. 9 im Bereich A vor dem Verlöten;
- Fig. 11 einen Querschnitt durch den Verbund von Fig. 9 im Bereich B nach dem Verlöten;
- Fig. 12 einen Querschnitt durch die Versuchsanordnung zur Herstellung von Verbundplatten im Batchverfahren.

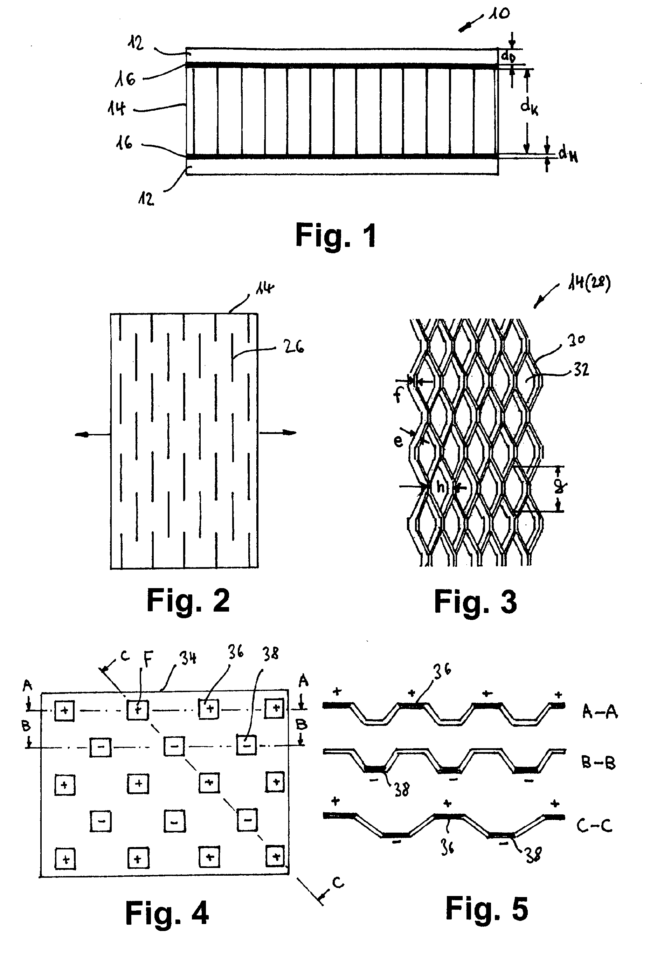

Eine Verbundplatte 10 weist gemäss Fig. 1 eine zwischen zwei Deckblechen 12 angeordnete Kernschicht 14 auf. Die Verbindung zwischen Kernschicht 14 und Deckblech 12 erfolgt über eine Hartlot-Zwischenschicht 16.

Ein in Fig. 2 gezeigtes Kernblech 14 weist eine regelmässige Anordnung von parallelen und versetzt zueinander angeordneten Einschnitten 26 auf. Durch Strecken dieses Kernbleches 14 quer zur Richtung der Einschnitte 26 entsteht ein in Fig. 3 gezeigtes Streckmetallblech 28 mit Stegen 30 und Zwischenräumen 32. Bei einem anderen bekannten Herstellungsverfahren von Streckmetall wird das Blech mit Einschnitten versehen und gleichzeitig gestreckt. Streckmetall kann nach bekannten Verfahren auch kontinuierlich in Linie hergestellt werden.

Bei der Herstellung von Streckmetallblech werden die Stege 30 aus der ursprünglichen Blechebene herausgedreht, so dass beim Auflegen eines Deckbleches praktisch nur die Schnittkanten der Stege 30 am Deckblech anliegen. Um diese Berührungsfläche zwischen Kernschicht 14 und einem Deckblech zu vergrössern, kann das Streckmetallblech 28 mehr oder weniger stark flachgewalzt werden. Für die weiter unten angeführten Versuche wurden zwei Streckmetallbleche mit den folgenden Dimensionen als Kernschichten verwendet:

| Varianten | A, B | C |
|---|---|---|
| - Blechdicke e | 0,5 mm | 1,5 mm |
| - Stegbreite f | 1,0 mm | 3.0 mm |
| - Längsausdehnung g der Zwischenräume 32 | 8 mm | 52 mm |
| - Querausdehnung h der Zwischenräume 32 | 3,5 mm | 14 mm |

Bei einem in den Fig. 4 und 5 gezeigten, als Kernschicht einsetzbaren Noppenblech 34 stehen auf beiden Seiten der Blechebene Noppen 36, 38 mit einer parallel zur Blechebene liegenden Bodenfläche F ab. Diese Bodenflächen F des Noppenbleches 34 bilden die späteren Kontaktflächen zu einem Deckblech 12. In Fig.4 ragen die mit (+) gekennzeichneten Noppen 36 aus der Papierebene nach oben und die mit (-) gekennzeichneten Noppen 38 nach unten ab. Die Noppen können jedoch beliebige Formen aufweisen und nach bekannten Verfahren beliebig ausgeformt werden.

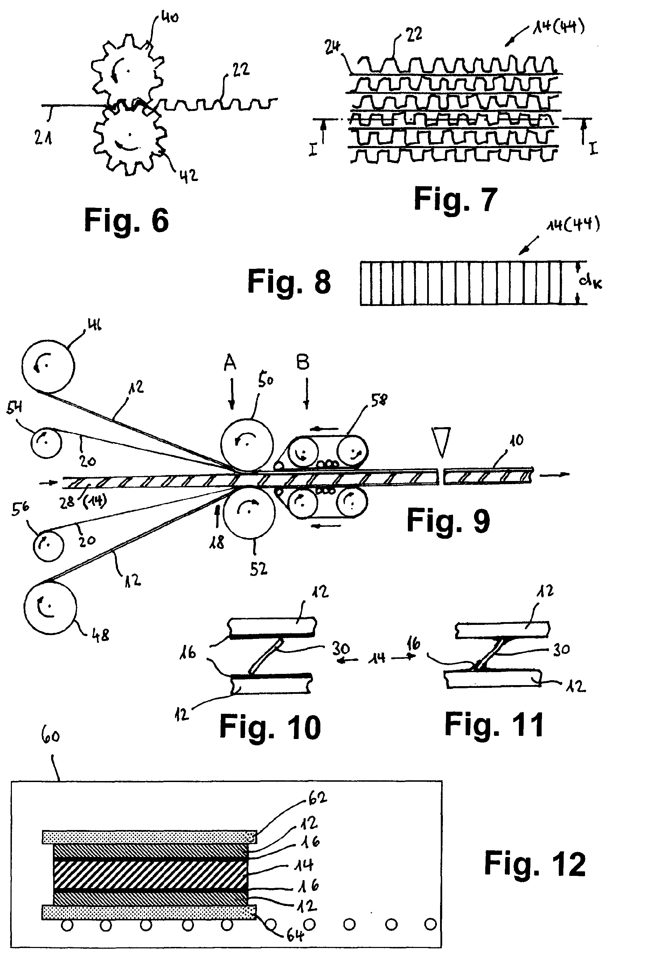

Wie in Fig. 6 gezeigt, kann aus einem Metallstreifen 21 über zwei ineinandergreifende und sich drehende Zahnräder 40, 42 ein korrugierter Metallstreifen 22 hergestellt werden. Gemäss Fig. 7 werden zur Bildung einer Kernschicht 14 korrugierte Metallstreifen 22 und nicht korrugierte Metallstreifen 24 alternierend seitlich aneinandergereiht. Die Breite der Metallstreifen 22, 24 entspricht der Dicke d_{K} des so als Kernschicht 14 gebildeten Wabenkernes 44 (Fig. 8). Bei einer Verbundplatte 10 der in Fig. 1 gezeigten Art ist zwischen Wabenkern 44 und den Deckblechen 12 je eine Hartlotfolie 20 eingelegt. Beim späteren Verlöten der Deckbleche 12 mit der Kernschicht 14 erfolgt einerseits eine Stabilisierung des Wabenkernes 44 und andererseits dessen Lötverbindung zu den Deckblechen 12.

Bei der in Fig. 9 dargestellten kontinuierlichen Herstellung von Verbundplatten 10 werden die Deckbleche 12 ab je einem Coil 46, 48 in den Spalt eines geheizten Walzenpaares 50, 52 geführt. In gleicher Weise werden ab zwei weiteren Coils 54, 56 zwei Hartlotfolien 20 kontinuierlich zugeführt. Die Zuführung der Kernschicht 14, z.B. ein Streckmetallblech 28, erfolgt zwischen die beiden Hartlotfolien 20.

Der aus den einzelnen Schichten gebildete Stapel 18 wird beim Durchlauf durch den Spalt des geheizten Walzenpaares 50, 52 leicht zusammengepresst. Beim Durchlauf durch das Walzenpaar 50, 52 schmelzen auch die Hartlotfolien 20 und stellen so die Verbindung zwischen der Kernschicht 14 und den Deckblechen 12 her. Beim Durchlauf durch eine nachfolgende gekühlte Doppelbandpresse 58 verfestigt sich die Lötverbindung und der Verbund wird, vorzugsweise unter Druck bzw. unter leichter Flächenpressung rasch auf Temperaturen von 150°C oder weniger abgekühlt. Eine rasche Abkühlung ist insbesondere dann von Bedeutung, wenn als Deckbleche 12 aushärtbare Legierungen eingesetzt werden. Die kontinuierlich aus der Doppelbandpresse 58 austretende Verbundbahn wird anschliessend in einzelne Verbundplatten 10 unterteilt.

Wie in den Fig. 10 und 11 dargestellt, umfliesst das beim Lötvorgang flüssig gewordene Hartlot aufgrund seiner Oberflächenspannung die Stege 30 des als Kernschicht eingesetzten Streckmetallbleches 28 und es entsteht trotz kleiner Berührungsfläche eine sehr gut haftende Lötverbindung zwischen Kernschicht 14 und Deckblech 12.

### Beispiele

Zur Prüfung der Qualität von Lötverbindungen wurden unterschiedlich aufgebaute Verbundplatten mit einer Kernschicht und beiderseits der Kernschicht angeordneten Deckschichten untersucht.

Als Deckbleche wurden in allen Fällen einseitig mit einem Hartlot aus der Legierung AA 4045 walzplattierte Bleche aus der Aluminiumlegierung AA 3003 eingesetzt.

Die Kernschichten wiesen folgende Strukturen auf:
A leicht gestrecktes Streckmetall mit feinen Stegen
B normal gestrecktes Streckmetall mit feinen Stegen
C normal gestrecktes Streckmetall mit groben Stegen
D Noppenblech

Die Dimensionsangaben für die Streckmetallbleche beziehen sich auf die Varianten A, B und C von Fig. 3. Einige der Streckmetallbleche wurden zur Vergrösserung der Lötkontaktfläche leicht gewalzt.

Alle Deckbleche und Kernschichten wurden entfettet.

Die als einzelne Stapel 18 vorbereiteten Verbunde sind aus Fig. 12 ersichtlich. Der Lötvorgang erfolgte in einem Ofen 60 bei 605°C mit nachfolgender Abkühlung auf 120°C.

Die Qualität der Lötverbindung zwischen Kernschicht und Deckblech kann bei allen auf diese Weise hergestellten Verbundplatten als gut bezeichnet werden. Im einzelnen wurden noch die folgenden Tests durchgeführt.

### Umformtest

Mit einer Stahlkugel von 55 mm Durchmesser wurden an 150 x 200 mm Verbundplatten Ausbauchtests durchgeführt. In einem ersten Versuch erfolgte die Verformung bis zum Auftreten eines Risses. In einem zweiten Versuch wurde die Verformung vor dem Auftreten eines Risses gestoppt. Die bei diesen Versuchen erzielten Ergebnisse sind in der nachfolgenden Tabelle zusammengestellt.

**Tabelle:**

| Umformverhalten | | | | |
|---|---|---|---|---|
| Verbundplattentyp | Verformung bis zum Riss [mm] | Verformung ohne Riss [mm] | Max. Kraft [kN] | Bemerkung |
| B | 31 | | 10,5 | Verformung bis zum Auftreten eines Risses |
| B | | 25 | 10 | Verformung vor Riss gestoppt |
| B | 30,5 | | 14 | Verformung bis zum Auftreten eines Risses |
| B | | 25 | 10.6 | Verformung vor Riss gestoppt |
| C | 27 | | 12 | Verformung bis zum Auftreten eines Risses |
| C | | 24 | 11,4 | Verformung vor Riss gestoppt |
| A | 22 | | 6,8 | Verformung bis zum Auftreten eines Risses |
| D | 29,5 | | 15 | Sehr kleiner Riss |

### Peeling Test (ASTM Nr. 1781)

Von den Verbundplatten wurden Streifen von 20 x 150 mm geschnitten und einem Peelingtest unterworfen.

Wegen der dünnen und weichen Deckbleche und auch wegen der guten Lötverbindung konnte dieser Test nicht immer durchgeführt werden. In praktisch allen Fällen riss das Deckblech sehr früh.

### Schweisstest

Bei allen untersuchten Verbundplattentypen konnte eine gute Schweissung erzielt werden.

### Lackiertest

Eine Verbundplatte mit einem Kernmaterial B wurde pulverlackiert und der Lack nachfolgend bei 196°C während 1 h ausgehärtet bzw. eingebrannt. Es konnte der Nachweis erbracht werden, dass die hartgelöteten Verbundplatten auch auf herkömmliche Weise einbrennlackiert werden können.

### Metallographische Prüfung

Metallographische Untersuchungen an Verbundplatten mit einem Kern aus Streckmetallblech haben gezeigt, dass das Niedertemperaturhartlot AlSi10 den Streckmetallkern und die Deckbleche ausserordentlich gut benetzt. Durch eine gleichzeitige Diffusion in beide Teile ergibt sich zwischen diesen eine starke Verbindung.

## Patentansprüche

1. Verbundplatte aus wenigstens einem Deckblech (12) aus Leichtmetall und wenigstens einer mit dem Deckblech (12) verbundenen Kernschicht (14) aus Leichtmetall, wobei die Kernschichten (14) eine geringere Durchschnittsdichte aufweisen als die Deckbleche (12),
**dadurch gekennzeichnet, dass**
benachbarte Deckbleche (12) und Kernschichten (14) über eine Zwischenschicht (16) aus einem Hartlot verbunden sind.

2. Verbundplatte nach Anspruch 1, **dadurch gekennzeichnet, dass** die Solidustemperatur (Tₛₒₗ) der für die Deckbleche (12) und die Kernschichten (14) verwendeten Werkstoffe über der Liquidustemperatur (T_{liq}) des Hartlotes liegt.

3. Verbundplatte nach Anspruch 1 oder 2, **dadurch gekennzeichnet, dass** die Deckbleche (12) und die Kernschichten (14) aus Aluminium oder Magnesium oder aus einer aushärtbaren oder nicht aushärtbaren Aluminium- oder Magnesiumlegierung bestehen.

4. Verbundplatte nach Anspruch 3, **dadurch gekennzeichnet, dass** die aushärtbaren Aluminiumlegierungen aus der Reihe AA 2xxx, 6xxx oder 7xxx ausgewählt sind.

5. Verbundplatte nach Anspruch 3, **dadurch gekennzeichnet, dass** die nicht aushärtbaren Aluminiumlegierungen aus der Reihe AA1xxx, 3xxx oder 5xxx ausgewählt sind.

6. Verbundplatte nach einem der Ansprüche 3 bis 5, **dadurch gekennzeichnet, dass** das Hartlot aus einer Aluminiumlegierung AA 4043, 4343, 4045 oder 4047 besteht.

7. Verbundplatte nach einem der Ansprüche 1 bis 6, **dadurch gekennzeichnet, dass** die Dicke (d_{D}) der Deckbleche (12) 0,2 bis 5 mm, die **Dicke** (d_{K}) der Kernschichten (14) 0,5 bis 500 mm und die **Dicke** (d_{H}) der Hartlotschichten (16) 0,01 bis 1 mm beträgt.

8. Verbundplatte nach einem der Ansprüche 1 bis 7, **dadurch gekennzeichnet, dass** die Kernschichten (14) aus ggf. leicht flachgewalztem Streckmetallblech, aus Wellblech, aus Noppenblech, aus einem Wabenkern, aus gestanztem, gelochtem und/oder geformtem Blech, aus einem ggf. mit dem Hartlot beschichteten Drahtgeflecht, aus einem gewobenen oder gestrickten, ggf. flachgewalzten und mit Hartlot beschichteten Material oder aus geschäumten Aluminium bestehen.

9. Verbundplatte nach einem der Ansprüche 1 bis 8, **dadurch gekennzeichnet, dass** eine Kernschicht (14) einseitig mit einem Deckblech (12) versehen ist.

10. Verbundplatte nach einem der Ansprüche 1 bis 8, **dadurch gekennzeichnet, dass** eine Kernschicht (14) beidseitig mit je einem Deckblech (12) versehen ist.

11. Verbundplatte nach einem der Ansprüche 1 bis 8, **dadurch gekennzeichnet, dass** wenigstens zwei Kernschichten (14) und wenigstens ein Deckblech (12) alternierend miteinander verbunden sind.

12. Verfahren zur Herstellung einer Verbundplatte (10) nach einem der Ansprüche 9 bis 11, **dadurch gekennzeichnet, dass** die Deckbleche (12), Kernschichten (14) und Hartlot-Zwischenschichten (16) zu einem Stapel (18) aufeinander gelegt werden, der Stapel (18) in einem Ofen (60) unter Schutzgasatmosphäre bei leichter Flächenpressung auf eine zwischen Liquidustemperatur (T_{liq}) des Hartlotes und der Solidustemperatur (Tₛₒₗ) der Deckblech- und Kernschichtwerkstoffe liegende Löttemperatur (T_{löt}) aufgeheizt und nach dem Schmelzen des Hartlotes unter leichter Flächenpressung abgekühlt wird.

13. Verfahren nach Anspruch 12, **dadurch gekennzeichnet, dass** die Deckbleche (12) und/oder die Kernschichten (14) aus einer aushärtbaren Legierung bestehen und die Abkühlung von der Löttemperatur (T_{löt}) so rasch erfolgt, dass die die Aushärtung bewirkenden Elemente in Lösung bleiben.

14. Verfahren nach Anspruch 12, **dadurch gekennzeichnet, dass** die Deckbleche (12) und/oder die Kernschichten (14) aus einer aushärtbaren Legierung bestehen und die Verbundplatten (10) einem nachfolgenden Zyklus bestehend aus Lösungsglühen, Abschrecken und Aushärten unterzogen werden.

15. Verfahren nach einem der Ansprüche 12 bis 14, **dadurch gekennzeichnet, dass** das Hartlot auf die Deckbleche (12) und/oder die Kernschichten (14) aufplattiert ist.

16. Verfahren nach einem der Ansprüche 12 bis 14, **dadurch gekennzeichnet, dass** das Hartlot als Folie (20) zwischen Deckblech (12) und Kernschicht (14) angeordnet ist.

17. Verfahren nach einem der Ansprüche 12 bis 14, **dadurch gekennzeichnet, dass** das Hartlot als Paste oder Pulver ggf. mit einem Flussmittel auf die Deckbleche (12) bzw. die Kernschichten (14) aufgetragen oder aufgesprüht ist.

18. Verfahren zur kontinuierlichen Herstellung von Verbundplatten (10) nach Anspruch 9 oder 10, **dadurch gekennzeichnet, dass** die Deckbleche (12) die Kernschicht (14) und die Hartlot-Zwischenschichten (16) kontinuierlich zu einem Stapel (18) zusammengeführt werden, der Stapel (18) unter Schutzgasatmosphäre auf eine zwischen der Liquidustemperatur (T_{liq}) des Hartlotes und der Solidustemperatur (Tₛₒₗ) der Deckblech- und Kernschichtwerkstoffe liegende Löttemperatur (T_{löt}) aufgeheizt und nach dem Schmelzen des Hartlotes abgekühlt wird und die einzelnen Verbundplatten (10) nachfolgend von der Verbundbahn abgetrennt werden.

19. Verfahren nach Anspruch 18, **dadurch gekennzeichnet, dass** die Deckbleche (12) und/oder die Kernschichten (14) aus einer aushärtbaren Legierung bestehen und die Abkühlung von der Löttemperatur (T_{löt}) so rasch erfolgt, dass die die Aushärtung bewirkenden Elemente in Lösung bleiben.

20. Verfahren nach Anspruch 18, **dadurch gekennzeichnet, dass** die Deckbleche (12) und/oder die Kernschichten (14) aus einer aushärtbaren Legierung bestehen und die Verbundplatten (10) einem nachfolgenden Zyklus bestehend aus Lösungsglühen, Abschrecken und Aushärten unterzogen werden.

21. Verfahren nach einem der Ansprüche 18 bis 20, **dadurch gekennzeichnet, dass** die Kernschicht (14) als ggf. leicht flachgewalztes Streckmetallblech, als Wellblech, als Noppenblech, als Wabenkern, als gestanztes, gelochtes und/oder geformtes Blech, als ggf. mit einem Hartlot beschichtetes Drahtgeflecht oder als gewobenes oder gestricktes, ggf. flachgewalztes und mit Hartlot beschichtetes Material zugeführt wird.

22. Verfahren nach einem der Ansprüche 18 bis 21, **dadurch gekennzeichnet, dass** das Hartlot auf die Deckbleche (12) und/oder auf die für die Herstellung der Kernschichten (14) vorgesehenen Bleche aufplattiert ist.

23. Verfahren nach einem der Ansprüche 18 bis 21, **dadurch gekennzeichnet, dass** das Hartlot als Folie (20) zwischen Deckblech (12) und Kernschicht (14) kontinuierlich zugeführt wird

24. Verfahren nach einem der Ansprüche 18 bis 21, **dadurch gekennzeichnet, dass** das Hartlot als Paste oder Pulver ggf. mit einem Flussmittel auf die Deckbleche (12) bzw. die Kernschichten (14) kontinuierlich aufgetragen oder aufgesprüht wird.

25. Verfahren nach Anspruch 21, **dadurch gekennzeichnet, dass** der Wabenkern aus einer Vielzahl von korrugierten und seitlich aneinandergereihten Metallstreifen (22) mit einer der Dicke (d_{K}) der Kernschicht (14) entsprechenden Breite gebildet ist.

26. Verfahren nach Anspruch 25, **dadurch gekennzeichnet, dass** zwischen einander benachbarten korrugierten Streifen (22) je ein nicht korrugierter Streifen (24) gleicher Breite angeordnet ist.
